# DEMANDE DE BREVET EUROPEEN

(11) **EP 0 574 327 A1**
(43) Date de publication de la demande: **15.12.1993**
(21) Numéro de dépôt: 93401503.3
(22) Date de dépôt: 11.06.1993
(51) Int. Cl.: A23B 4/07, A23B 4/26, A23L 3/365, A23L 1/01

(54) **Procédé de décongélation de produits alimentaires**

(30) Priorité: 12.06.1992 FR 9207091
(71) Demandeur: JAEGER PARTICIPATIONS S.A., F-95400 Arnouville-les-Gonesse (FR)
(72) Inventeur: Thirode, Pierre, F-92000 Neuilly (FR)
(74) Mandataire: Leszczynski, André

(57) **Abrégé**

On place les produits alimentaires congelés dans une cuve (7) hermétique fermée, montée rotative autour d'un axe (9) sensiblement horizontal, on entraîne cette cuve (7) en rotation, et on place aux alentours de la cuve un ventilateur (21) qui évacue l'air refroidi au contact de la cuve (7), et le remplace par de l'air à température ambiante.

## Description

La présente invention a pour objet un procédé de décongélation de produits alimentaires, notamment des blocs de viande.

La décongélation de produits alimentaires à l'échelle industrielle, nécessite des délais importants compte tenu du volume des produits à décongeler.

FR-A-2324269 décrit un appareil pour la cuisson d'aliments, également utilisable pour la décongélation de mets congelés friables.

Cet appareil comprend un tambour horizontal tournant perméable aux gaz chauds utilisés pour le chauffage.

Il s'agit d'un appareil de type domestique tout à fait inadapté pour assurer une décongélation rapide de grands volumes de produits dans des applications industrielles.

La présente invention propose un nouveau procédé de décongélation rapide utilisable à l'échelle industrielle, ainsi qu'un dispositif pour la mise en oeuvre de ce procédé.

La présente invention a pour objet un procédé de décongélation de produits alimentaires, notamment de blocs de viande, caractérisé par le fait que l'on place les produits alimentaires congelés dans une cuve hermétique fermée, montée rotative autour d'un axe sensiblement horizontal, que l'on entraîne cette cuve en rotation, et que l'on réalise un échange thermique entre les produits et un fluide d'échange thermique amené dans et/ou à la périphérie de la cuve, de préférence au moyen d'un ventilateur placé aux alentours de la cuve qui évacue l'air refroidi au contact de la cuve et le remplace par de l'air à température ambiante.

Le fait de réaliser simultanément la décongélation et le malaxage des produits du fait de la rotation de la cuve, permet de limiter la perte de poids de ces produits lors de leur décongélation, car le malaxage provoque la réabsorption des exsudats par les produits.

Selon un mode de mise en oeuvre particulier de l'invention, notamment pour la décongélation de blocs de viande, on introduit dans la cuve un sel ou une saumure, de manière à commencer le saumurage des produits en même temps que leur décongélation.

Par ailleurs, le sel présent dans la cuve abaisse la température de décongélation des produits alimentaires et améliore l'efficacité de la décongélation.

Enfin, le fait d'introduire du sel dès les premiers réchauffements des produits, permet d'inhiber le développement de bactéries.

Pour améliorer encore les échanges entre les produits alimentaires et le fluide d'échange thermique, le procédé prévoit, selon un mode de mise en oeuvre préféré de l'invention, de mettre sous vide l'intérieur de la cuve par intermittence ou en continu.

Cette mise sous vide présente l'avantage de favoriser la pénétration des exsudats et du sel dans les produits en cours de décongélation.

On peut utiliser selon l'invention, comme fluide d'échange thermique, de la vapeur d'eau que l'on injecte, de façon intermittente ou continue à l'intérieur de la cuve.

En outre, dans le cas où l'on met la cuve sous vide, on peut y injecter de la vapeur froide, laquelle conserve sa chaleur latente qui est libérée dans les produits par condensation.

Avantageusement, on peut alterner les injections de vapeur et les mises sous vide de la cuve.

La présente invention permet également de réaliser la cuisson de produits alimentaires congelés. A cet effet, après mise en oeuvre du procédé de décongélation décrit ci-dessus, on maintient la cuve en rotation et on continue l'injection de vapeur et éventuellement les mises sous vide de la cuve et l'introduction de sel ou de saumure, jusqu'à une cuisson au moins partielle desdits produits alimentaires.

Ce procédé permet d'éviter des manutentions au cours desquelles les produits alimentaires sont extraits de la cuve de décongélation et sont introduits soit dans une cuve de cuisson, soit dans tout autre dispositif prévu pour leur cuisson.

On peut selon l'invention utiliser comme fluide d'échange thermique, un fluide chaud que l'on fait circuler sur les faces externes des parois de la cuve, et/ou d'un organe de malaxage éventuellement situé dans la cuve.

On peut à cet effet faire circuler le fluide chaud dans une double paroi de la cuve.

Le fluide peut être chauffé extérieurement à la cuve et amené à circuler dans des canalisations logées dans la double paroi de la cuve.

On peut également placer des résistances électriques chauffantes dans cette double paroi, pour chauffer le fluide circulant. Dans ce cas, les résistances transmettent également une quantité de chaleur directement à la paroi de la cuve.

Cependant de préférence, comme indiqué ci-dessus, on place aux alentours de la cuve, un ventilateur qui évacue l'air refroidi au contact de la cuve et le remplace par de l'air à température ambiante qui constitue alors un fluide chaud au sens de l'invention.

L'échange thermique se produit alors entre les produits alimentaires et l'air ambiant, ce qui présente l'avantage dans certains cas, de provoquer une décongélation lente des produits, laquelle évite de trop grands différentiels de température entre le coeur des produits et leur surface.

Dans le but de mieux faire comprendre l'invention on va en décrire maintenant un mode de mise en oeuvre et un mode de réalisation donnés à titre d'exemples et sans aucun caractère limitatif en référence au dessin schématique annexé dans lequel :
- la figure 1 représente schématiquement les variations de température d'un cycle de décongélation de blocs de viande selon un mode de mise en oeuvre particulier du procédé de décongélation selon l'invention, et
- la figure 2 représente une vue en élévation latérale d'un mode de réalisation de dispositif pour la mise en oeuvre du procédé selon l'invention.

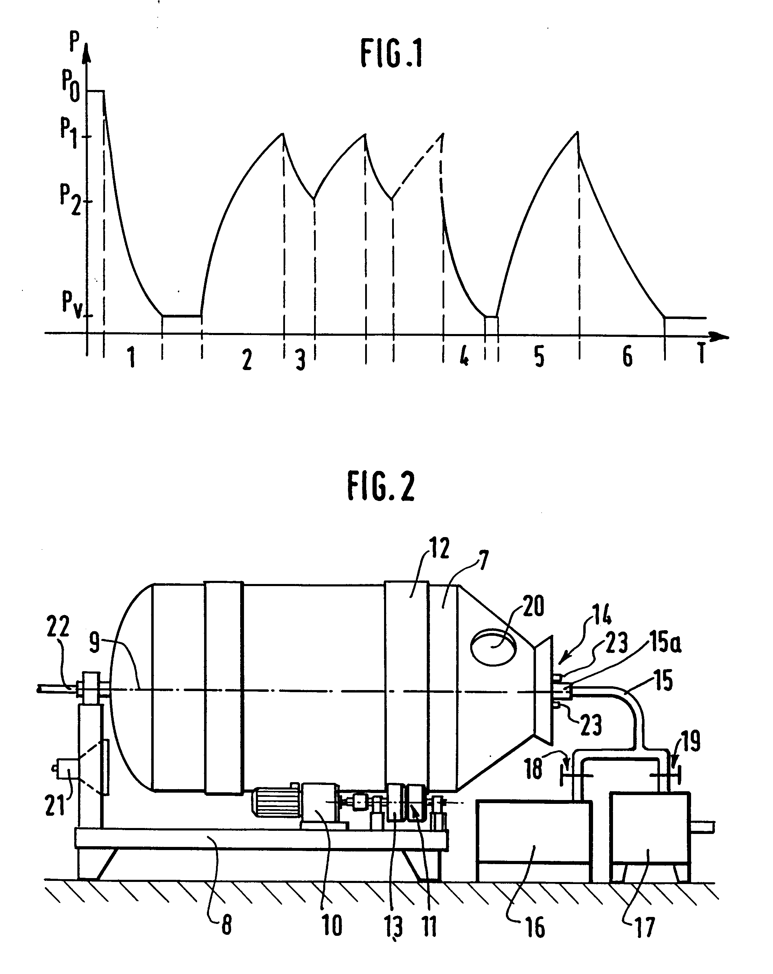

Sur la figure 1, on a schématiquement représenté les variations de pression à l'intérieur de la cuve en fonction du temps, pendant une mise en oeuvre du procédé selon l'invention alternant des injections de vapeur et des mises sous vide de la cuve.

Le cycle représenté sur cette figure peut se décomposer comme suit :

Dans une première phase 1, l'intérieur de la cuve est mis sous vide, la pression passe de la pression atmosphérique Po à une pression à vide Pv qui est proche de la pression nulle.

La mise sous vide de l'intérieur de la cuve présente l'avantage de diminuer la perte de poids des produits alimentaires qui sont ainsi plus à même d'absorber une saumure apportée au cours de cette phase 1.

Au cours d'une deuxième phase 2, on injecte de la vapeur à l'intérieur de la cuve jusqu'à obtenir une pression P₁ à l'intérieur de la cuve, qui est inférieure à la pression atmosphérique; la vapeur froide pénètre alors dans les fibres des produits alimentaires.

Durant une troisième phase 3, la vapeur se condense et se transforme en gouttelettes d'eau. Elle libère sa chaleur latente et réchauffe les produits alimentaires, tandis que la pression diminue.

Quand la pression à l'intérieur de la cuve a atteint une valeur P₂, on injecte à nouveau de la vapeur jusqu'à obtenir à nouveau la pression P₁ à l'intérieur de la cuve et ainsi de suite, comme représenté en traits discontinus.

Au cours d'une phase ultérieure 4, le vide à l'intérieur de la cuve ayant tendance à diminuer compte tenu des éventuelles fuites du couvercle et du dégazage de la viande en cours de décongélation, on procède à une remise sous vide de la cuve jusqu'à atteindre une pression Pv.

Le cycle de décongélation reprend pendant une phase suivante 5, puis s'achève au cours d'une phase 6 à partir de laquelle peut continuer un malaxage sous vide des produits alimentaires, conformément à un procédé de malaxage connu.

Dans une variante, on pourrait continuer les injections de vapeur dans le but de cuire les produits alimentaires décongelés.

A titre d'exemple on peut citer les valeurs suivantes pour les différents paramètres :
- temps de décongélation d'une tonne de poitrine : trois à quatre heures.
- pression P₁ : 0,8 Po
- pression P₂ : 0,5 Po
- pression Pv : voisin de 0

La décongélation obtenue est régulière et homogène du fait de l'action de malaxage de la cuve.

La qualité des aliments est en outre améliorée. La diminution de leur perte de poids et la réincorporation des jus issus de la décongélation y contribuent grandement.

A titre de comparaison, la perte de poids des aliments par élimination du jus de décongélation peut atteindre 7% dans le procédé de décongélation classique, alors qu'elle est quasiment nulle dans le procédé selon l'invention.

Du point de vue bactériologique, enfin, le nombre réduit de manipulations des produits congelés ainsi que l'introduction de sel dès les premières phases de décongélation permettent d'inhiber le développement des bactéries.

La figure 2 représente un mode de réalisation d'un dispositif pour la mise en oeuvre du procédé décrit ci-dessus.

Sur cette figure, une cuve 7 est montée sur un châssis 8 autour d'un axe de rotation sensiblement horizontal 9.

Pour entraîner cette cuve en rotation, le châssis 8 comporte un moteur 10 solidaire en rotation d'un dispositif d'entraînement 11.

La cuve comporte une zone de friction périphérique 12 qui coopère avec une roue de friction 13 du dispositif d'entraînement 11.

La partie avant de la cuve, située à droite sur le dessin, présente une forme tronconique convergente à l'extrémité de laquelle est située une porte étanche 14 qui permet l'introduction des produits alimentaires dans la cuve 7.

Dans la partie centrale de la porte étanche, pénètre une canalisation 15 reliant l'intérieur de la cuve 7 à une chaudière génératrice de vapeur 16 d'une part et à une pompe à vide 17 d'autre part.

La canalisation 15 est pourvue d'un raccord tournant 15a qui permet la rotation de la cuve 7 autour de son axe 9 sans détérioration de la canalisation.

Des électrovannes 18 et 19 permettent d'ouvrir ou de fermer l'alimentation en vapeur ou l'aspiration de la pompe à vide. Ces électrovannes peuvent être commandées par un dispositif de commande électrique non représenté.

Sur sa partie avant tronconique, la cuve comporte également un trou 20 d'observation.

Sur cette figure on a également représenté un ventilateur 21 qui permet d'augmenter les échanges thermiques entre le milieu ambiant et la paroi de la cuve 7 en renouvelant l'air refroidi au voisinage de la cuve 7.

A l'arrière de la cuve, une sonde 22 est montée sur un raccord tournant et permet de mesurer en continu la température à l'intérieur de la cuve.

Un dispositif électronique de régulation tel qu'un microprocesseur non représenté peut avantageusement être utilisé pour commander l'ouverture des vannes 18 et 19 en fonction de la température mesurée par la sonde 22.

Sur la porte étanche 14 on a disposé des soupapes de sécurité 23 destinées à laisser échapper du gaz si l'intérieur de la cuve est soumis à une pression trop élevée.

Ces soupapes 23 sont particulièrement utiles dans le cas où l'on met en oeuvre le procédé selon l'invention sans mettre la cuve sous vide avant de procéder aux injections de vapeur.

Il est bien entendu que le mode de mise en oeuvre et le mode de réalisation qui viennent d'être décrits ne présentent aucun caractère limitatif et qu'ils pourront recevoir toutes modifications désirables sans sortir pour cela du cadre des revendications.

En particulier, bien que le mode de mise en oeuvre décrit inclut une mise en oeuvre sous vide préalable de la cuve avant de commencer les injections de vapeur, le procédé selon l'invention prévoit également de pouvoir procéder à des injections de vapeur à pression atmosphérique, c'est-à-dire sans mise sous vide de la cuve.

En outre, la canalisation unique 15 peut être avantageusement remplacée par deux canalisations, l'une située à l'avant de la cuve, l'autre située à l'arrière.

Enfin, on peut prévoir pour faciliter le réchauffement des produits en cours de décongélation, une cuve munie d'une double paroi dans laquelle sont placées des résistances électriques chauffantes ou un fluide chaud en circulation. De même, une pale pour le malaxage peut être intérieurement munie d'éléments chauffants.

## Revendications

1. Procédé de décongélation de produits alimentaires, notamment de blocs de viande, caractérisé par le fait que l'on place les produits alimentaires congelés dans une cuve (7) hermétique fermée, montée rotative autour d'un axe (9) sensiblement horizontal, que l'on entraîne cette cuve (7) en rotation, et que l'on place, aux alentours de la cuve, un ventilateur (21) qui évacue l'air refroidi au contact de la cuve (7), et le remplace par de l'air à température ambiante.

2. Procédé de décongélation selon la revendication 1, caractérisé par le fait que, les produits à décongeler étant des blocs de viande, on introduit dans la cuve (7) un sel ou une saumure, de manière à commencer le saumurage des produits en même temps que leur décongélation.

3. Procédé selon l'une quelconque des revendications précédentes, caractérisé par le fait que l'on met sous vide l'intérieur de la cuve (7) par intermittence ou en continu.

4. Procédé selon l'une quelconque des revendications précédentes, caractérisé par le fait que l'on injecte de la vapeur d'eau à l'intérieur de la cuve (7) de façon intermittente ou continue.
